Europäisches Patentamt

(19) **European Patent Office**

Office européen des brevets

(11) Publication number: **0 234 864**
**B1**

(12) **EUROPEAN PATENT SPECIFICATION**

(45) Date of publication of the patent specification:
24.01.90

(21) Application number: **87301421.1**

(22) Date of filing: **19.02.87**

(51) Int. Cl.⁴: **F16C 1/22**

(54) Control cable adjuster device.

(30) Priority: **21.02.86 US 832526**

(43) Date of publication of application:
**02.09.87 Bulletin 87/36**

(45) Publication of the grant of the patent:
**24.01.90 Bulletin 90/4**

(84) Designated Contracting States:
**DE ES FR GB IT**

(56) References cited:
**EP-A- 0 120 616**
**US-A- 4 378 713**

(73) Proprietor: **Acco Babcock Inc., 425 Post Road, Fairfield Connecticut 06430(US)**

(72) Inventor: **Pickell, John Middleton, 2927 Bel Aire, Highland Michigan 48301(US)**

(74) Representative: **Lewis, David Overington, Babcock International plc 217 Tabard Street, London SE1 4UR(GB)**

ACTORUM AG

**Description**

This invention relates to control cable adjuster devices and, more particularly to devices insertable into control cable runs either at intermediate locations or adjacent terminations to provide tensioning of the cable run, such as in foot pedal operated cable controlled brake systems or clutches in automobiles.

In US A-4 378 713 there is disclosed a control cable adjuster device including a tubular housing having at one end a first anchorage connectable into a cable run and at the other end locating means for a termination member movably extending co-axially of the tubular housing between a position fully retracted into, and a position fully extended from, the tubular housing, the termination member being formed on the surface thereof with circumferential serrations engageable with collet means and, on the end thereof remote from the tubular housing, a second anchorage connectable into the cable run.

By the present invention, the device includes first resilient means biasing the termination member toward the position fully retracted into the tubular housing, the collet means are located in the locating means and formed on radially inner faces with serrations adapted to co-act with the serrations on the termination member, second resilient means biasing the collet means radially inwardly, a first frusto-conical surface in the locating means at the axially inner end thereof arranged to co-act with first, part frusto-conical, surfaces on the collet means such that relative axial movement of the collet means axially inwardly urges the collet means radially outwardly and a second frusto-conical surface in the locating means at the axially outer end thereof arranged to co-act with second, part frusto-conical, surfaces on the collet means such that relative axial movement of the collet means axially outwardly urges the collet means radially inwardly to engage the serrations on the collet means with the serrations on the termination member and thereby restrain axial movement of the termination member toward the position of being fully extended from the tubular housing.

The invention will now be described, by way of example, with reference to the accompanying, partly diagrammatic, drawings, in which:-

Figure 1 is a longitudinal sectional view of a self-adjusting cable control device in an engaged configuration;

Figure 2 is a view of a portion of the device to an enlarged scale showing the device in a disengaged configuration;

Figure 3 is a cross section view taken on the line III-III in Figure 1;

Figure 4 is a sectional view showing the device in an initial configuration;

Figure 5 is a cross section taken on the line V-V in Figure 4; and

Figure 6 is a partly sectioned view of an end portion of the device with a shroud or boot in position.

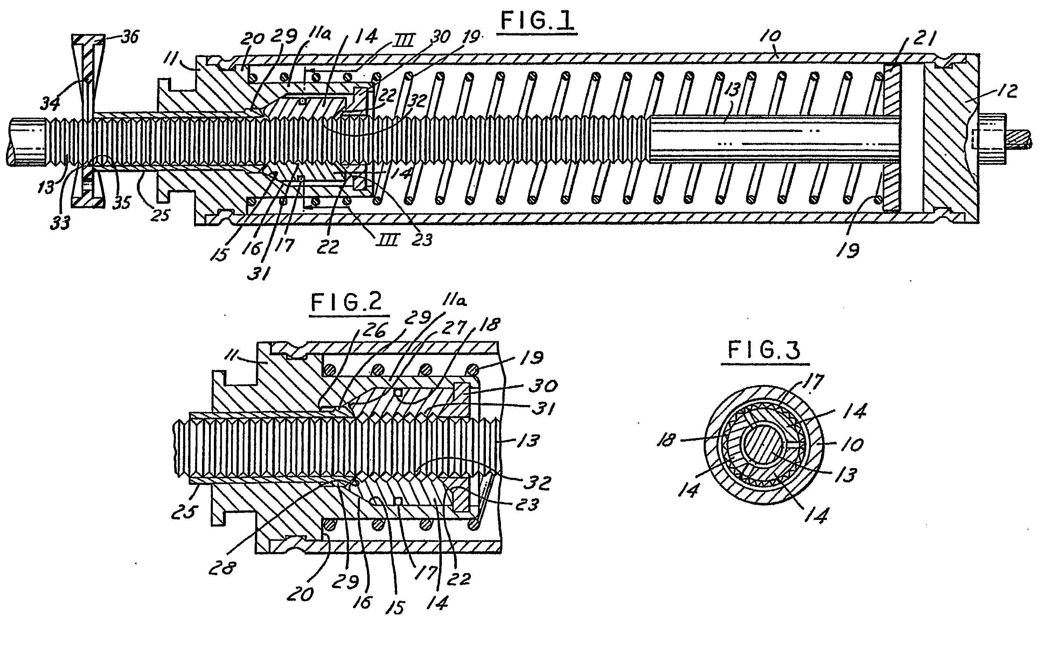

Referring to Figures 1 to 4, the self-adjusting cable control device is arranged to be interposed in a cable run (not shown) and comprises a connecting member in the form of a tubular housing 10 having end portions crimped into grooves on end inserts 11, 12 to hold the end inserts 11, 12 in position. A termination member in the form of a rod 13 extends through an opening in the end insert 11 which serves to locate the termination member rod . The device is connected into a cable run with first and second anchorages (not shown) on the end insert 12 and on the termination member rod 13.

Clutch means releasably connecting the tubular housing 10 and the rod 13 include collet members 14 positioned around the rod 13 within a cup portion 11a of end insert 11. Each collet member 14 has a first, external, part frusto-conical surface 15 at one end adapted to engage a complementary, first, internal frusto-conical surface 16 on the end insert 11 having a slightly lesser cone angle than the surfaces 15. A circumferential retaining spring 17 extends circumferentially in aligned grooves 18 in each collet member 14 resiliently to urge the collet members 14 radially inwardly into contact with the termination member 13. A helical spring 19 interposed between an abutment or shoulder 20 on the end insert 11 and a disc 21 fixed on the end of the termination member rod 13 resiliently urges the termination member rod 13 axially inwardly of the housing 10 and to the right as seen in Figure 1. Each collet member 14 is also formed at the end thereof opposite the end having surface 15, with a second, internal, part frusto-conical surface 22, complementary to a second, external, frusto-conical surface 23 on an end cap 30 secured into the cup portion 11a. The radially inner faces of the collet members 14 and a portion of the rod 13 are circumferentially grooved to form axially spaced, co-acting, 90° triangular profile, serrations 31, 32. The interengagement of the internal and external conical surfaces 22, 15 of the collet members 14 with the internal frusto-conical surface 16 of the end insert 11 and the external frusto-conical surface 23 of the end cap 30 is such as to permit the collet members 14 to maintain a co-axial disposition and disengage over the complete length of the serrations 32 on the radially inner faces.

An axially movable release tube 25 extending through the end insert 11 around the termination member rod 13 has an enlarged inner end 29 engaging a shoulder 26 on the end insert 11 to retain the tube 25 against axially outward movement and is formed at a forward end with a third, external, frusto-conical surface 28.

Complementary, third, internal, part frusto-conical surfaces 27 are formed on the collet member 14 with a cone angle slightly greater than the cone angle of the surface 28.

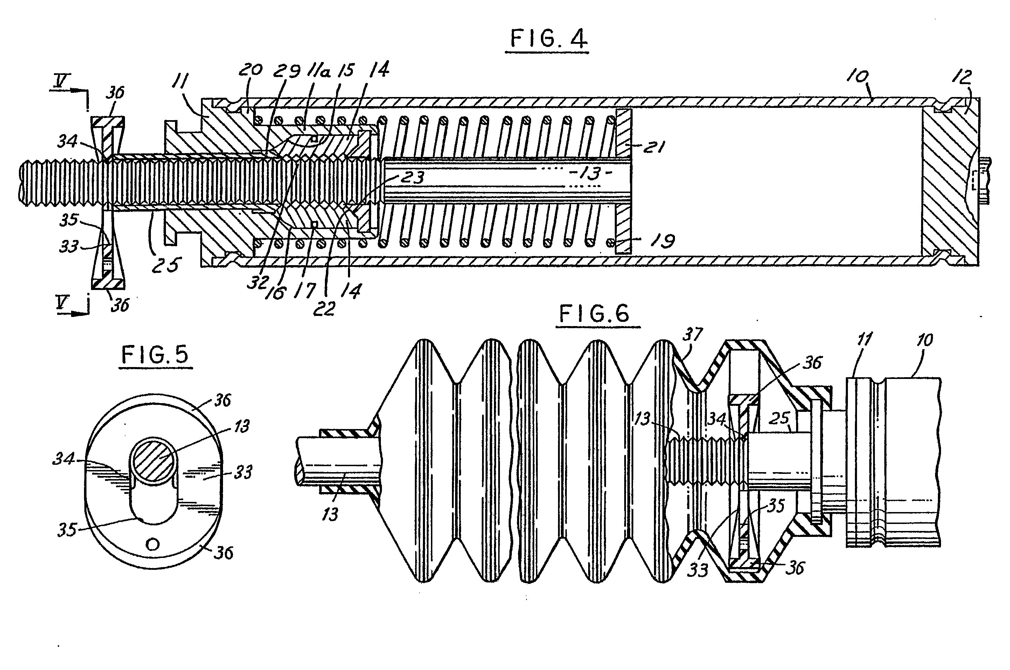

As indicated in Figures 5 and 6, a plastics clip 33 is formed with an elongate circular opening having a portion 34 the periphery of which is shaped to engage against the serrations 32 and a portion 35 of greater diameter than the rod 13 but of lesser diameter than the release tube 25. Flanges 36 are provided at end portions of the clip. A convoluted shroud or boot 37 of elastic material surrounds the clip 36 and seats on the end insert 11 and the rod 13 to provide a seal against dirt, oil and other deleterious matter.

In operation, to install the device into a cable run, the clip 33 is moved into a position indicated in Figure 1 in which the rod 13 passes freely through the portion 35 and in which a web-portion of the clip bears against the end of the release tube 25. The clip is then urged axially toward the tubular housing 10 to move the release tube 25 axially into the tubular housing, thereby moving the enlarged inner end 29 away from the shoulder 26 and, by the inter-action of the sets of frusto-conical surfaces 28, 27 and 23, 22, moving the collet members 14 axially and radially out of engagement with the serrations 32 on the rod 13. Tension is then applied to the rod 13 and the tubular housing 10 to withdraw the rod 13 axially from the housing to an extended position and thereby compress the helical spring 19. With the rod 13 at the extended position indicated in Figure 4, the clip 33 is moved - in a direction perpendicular to the rod 13 - to engage the portion 34 with one of the serrations 32, thereby preventing retraction of the rod 13 into the tubular housing 10 by the effect of the helical spring 19. The device is then connected into the slack cable run by attachments (not shown) to the tubular housing 10 and rod 13. Having effected attachment, the clip 33 is returned to the position in which the rod 13 passes freely through the portion 35, whereupon the resilience of the helical spring 19 urges retraction of the rod 13 axially into the housing 10 and applies tension to the cable run. Upon the helical spring 19 reaching full extension commensurate with the tension in the cable run, at an intermediate position of retraction of the rod 13 into the tubular housing 10, the resilience of the circumferential retaining spring 17 is such as to overcome the radial component of the force across the serrations 31, 32 and urge the collect members 14 radially inwardly to bring the serrations into engagement, thereby restraining axial movement between the tubular housing 10 and the rod 13. Movement of the collet members radially inwardly urges the release tube 25 axially outwardly. If, during use, the tension in the cable run falls below the force exerted by the helical spring 19 to an extent that axial movement of the rod 13 relative to the tubular housing 10 brings the frusto-conical faces 22, 23 into abutment and the radial component of the force across the serrations 31, 32 and the frusto-conical surfaces 22, 23 is sufficient to exceed the force exerted by the circumferential retaining spring 17, the rod 13 being at an intermediate position of retraction, the collet members 14 move radially outwardly out of full engagement with the rod so that the respective serrations 31, 32 ratchet to a new axial position to restore the balance of forces by adjusting the effective length of the cable run within the limits imposed by the length of the tubular housing 10.

Since the convoluted shroud or boot 37 is flexible, movement of the clip 33 can be effected by applying manual pressure to the outer surface of the convoluted shroud or boot adjacent the flanges 36, so that the convoluted shroud or boot serves at all times to limit ingress of grease or dirt or other deleterious matter into the tubular housing 10.

It will be appreciated that, in instances where initial tensioning of the cable run may be effected at another location in the cable run, the release tube 25 and clip 33 may be omitted from the device, which will then serve solely to maintain tension in the cable run within predetermined limits.

It also will be appreciated that the serrations may be formed as a screw thread rather than axially spaced circumferential grooves.

It will further be appreciated that whilst the foregoing description envisages the device being connected into a run of core cable, preferably at one end thereof, the device is readily modified to be connected into a run of conduit of a control cable. In such an arrangement the core cable extends centrally through the device and the conduit is connected into the end insert 12 and the rod 13, which are made hollow to accommodate the core cable. Alternatively, the conduit in the form of a tightly wound wire spiral, may be substituted for the rod provided strength considerations allow.

## Claims

1. A control cable adjuster device including a tubular housing (10) having at one end a first anchorage (12) connectable into a cable run and at the other end locating means (11) for a termination member (13) movably extending co-axially of the tubular housing (10) between a position fully retracted into, and a position fully extended from, the tubular housing, the termination member (13) being formed on the surface thereof with circumferential serrations (32) engageable with collet means (14) and, on the end thereof remote from the tubular housing, a second anchorage connectable into the cable run, characterised in that first resilient means (19) bias the termination member toward the position fully retracted into the tubular housing, the collet means (14) are located in the locating means and are formed on radially inner faces with serrations (31) adapted to co-act with the serrations (32) on the termination member, second resilient means (17) bias the collet means (14) radially inwardly, a first frusto-conical surface (23) in the locating means (11) at the axially inner end thereof is arranged to co-act with first, part frusto-conical, surfaces (22) on the collet means (14) such that relative axial movement of the collet means axially inwardly urges the collet means radially outwardly and a second frusto-conical surface (16) in the locating means at the axially outer end thereof is arranged to co-act with second, part frusto-conical, surfaces (15) on the collet means such that relative axial movement of the collet means axially outwardly urges the collet means radially inwardly to engage the serrations (31) on the collet means with the serrations (32) on the termination member and thereby restrain axial movement of the termination member toward the position of being fully extended from the tubular housing.

2. A control cable adjuster device as claimed in Claim 1, characterised in that a release tube (25) extends, co-axially of and adjacent the termination member (13), through the locating means (11) and, at the axially inner end, is formed with a third frusto-conical surface (28) arranged to co-act with third part frusto-conical surfaces (27) on the collet means (14) such that relative movement of the release tube (25) axially inwardly urges the collet means (14) radially outwardly.

3. A control cable adjuster device as claimed in Claim 2, characterised in that the cone angle of the third frusto-conical surface (28) on the release tube (25) is slightly less than the cone angle of the third part frusto-conical surfaces (27) on the collet means (14).

4. A control cable adjuster device as claimed in Claim 2 or Claim 3, characterised in that the release tube (25) is formed at the axially inner end with an enlarged head (29) arranged to be seatable in a counter-bore (26) in the locating means (11).

5. A control cable adjuster device as claimed in Claim 2, Claim 3 or Claim 4, characterised in that a clip (33) is provided on a portion of the termination member (13) external to the tubular housing (10) and is movable between an engaged position, at which the clip (33) is engaged with at least one of the serrations (32) on the termination member, and a disengaged position, at which the clip is disengaged from the serrations (32).

6. A control cable adjuster device as claimed in Claim 5, characterised in that the clip (33) is formed as an elongate circular disc having an elongate circular aperture one portion (34) of which is narrower than the other portion (35) to engage the serrations (32) and the circular ends of the disc are formed with flanges (36).

7. A control cable adjuster device as claimed in any preceding claim, characterised in that the first resilient means (19) include a helical spring extending between a seating (20) on the locating means (11) and a collar (21) attached to the termination member at an end portion located within the tubular housing (10).

8. A control cable adjuster device as claimed in any preceding claim, characterised in that the second resilient means (17) include a circumferential spring positioned in circumferentially extending grooves (18) in radially outer faces of the collet means (14).

9. A control cable adjuster device as claimed in any preceding claim, characterised in that the serrations (31,32) are formed as axially spaced circumferential grooves of 90° triangular profile.

10. A control cable adjuster device as claimed in any preceding claim, characterised in that a flexible convoluted shroud or boot (37) is provided as a seal between the tubular housing (10) and the termination member (13).

11. A control cable adjuster device as claimed in any preceding claim, characterised in that the cone angle of the second frusto-conical surface (16) in the locating means (11) is slightly lesser than the cone angle of the second, part frusto-conical surfaces (15) on the collet means (14).

## Revendications

1. Dispositif de réglage pour câble de commande comportant un logement tubulaire (10) présentant à une extrémité une première attache (12) pouvant être reliée à un brin de câble et à l'autre extrémité un moyen (11) de positionnement d'un élément terminal (13) monté mobile coaxialement au logement tubulaire (10) entre une position de pleine rétraction dans le logement tubulaire et une position de pleine extension hors de celui-ci, l'élément terminal (13) présentant sur sa surface des dents périphériques (32) pouvant en grener avec un collet (14) et, sur son extrémité distante du logement tubulaire, une seconde attache pouvant être reliée au brin de câble, carartérisé en ce qu'un premier moyen élastique (19) sollicite l'élément terminal vers la position de pleine rétraction dans le logement tubulaire, le collet (14) est situé dans le moyen de positionnement et présente sur des faces radialement intérieures des dents (31) destinées à coopérer avec les dents (32) de l'élément terminal, un second moyen élastique (17) sollicite le collet (14) radialement vers l'intérieur, une première surface tronconique (23) prévue dans le moyen de positionnement (11) à l'extrémité axialement intérieure de celui-ci est agencée pour coopérer avec de premières surfaces, en partie tronconiques, (22) du collet (14) de façon qu'un déplacement axial relatif du collet axialement vers l'intérieur sollicite le collet radialement vers l'extérieur et une seconde surface tronconique (16) prévue dans le moyen de positionnement à l'extrémité axialement extérieure de celui-ci est agencée pour coopérer avec de secondes surfaces, en partie tronconiques, (15) prévues sur le collet de façon qu'un déplacement axial relatif du collet axialement vers l'extérieur sollicite le collet radialement vers l'intérieur pour faire engrener les dents (31) du collet avec les dents (32) de l'élément terminal et entraver par là le déplacement axial de l'élément terminal vers la position de pleine extension hors du logement tubulaire.

2. Dispositif de réglage pour câble de commande selon la revendication 1, caractérisé en ce qu'un tube de libération (25) s'étend, coaxialement à l'élément terminal (13) et auprès de lui, à travers le mo en de positionnement (11) et présente, à l'extrémité axialement intérieure, une troisième surface tronconique (28) agencée pour coopérer avec des troisièmes surfaces partiellement tronconiques (27) du collet (14) de façon qu'un déplacement relatif du tube de libération (25) axialement vers l'intérieur sollicite le collet (14) radialement vers l'extérieur.

3. Dispositif de réglage pour câble de commande selon la revendication 2, carartérisé en ce que la conicité de la troisième surface tronconique (28) du tube de libération (25) est légèrement inférieure à la conicité des troisièmes surfaces partiellement tronconiques (27) du collet (14).

4. Dispositif de réglage pour câble de commande selon la revendication 2 ou la revendication 3, caractérise en ce que le tube de libération (25) présente à l'extrémité axialement intérieurs une tête élargie (29) agencée pour pouvoir prendre appui dans un contre-alésage (26) du moyen de positionnement (11).

5. Dispositif de réglage pour câble de commande selon la revendication 2, la revendication 3 ou la revendication 4, caractérisé en ce qu'un circlip (33) est prévu sur un tronçon de l'élément terminal (13) extérieur au logement tubulaire (10) et est mobile entre une position d'engagement, dans laquelle il est engagé sur l'une au moins des dents (32) de l'élément terminal, et une position de dégagement, dans laquelle il est dégagé des dents (32).

6. Dispositif de réglage pour câble de commande selon la revendication 5, caractérisé en ce que le circlip (33) est réalisé sous forme de disque circulaire oblong présentant un trou circulaire oblong dont une partie (34) est plus étroite que l'autre partie (35) pour s'engager sur les dents (32) et les extrémités circulaires du disque présentent des rebords (36).

7. Dispositif de réglage pour câble de commande selon toute revendication précédente, caractérise en ce que le premier moyen élastique (19) comporte un ressort hélicoïdal s'étendant entre un siège (20) prévu sur le moyen de positionnement (11) et un collier (21) fixé à l'élément terminal sur un tronçon extrême situé dans le logement tubulaire (10). 8. Dispositif de réglage pour câble de commande selon toute revendication précédente, caractérisé en ce que le second moyen élastique (17) comporte un ressort périphérique placé dans des rainures (18) s'étendant périphériquement dans des faces radialement extérieures du collet (14).

9. Dispositif de réglage pour câble de commande selon toute revendication précédente, caractérisé en ce que les dents (31 – 32) sont réalisées sous forme de rainures périphériques axialement espacées à profil en angle droit.

10. Dispositif de réglage pour râble de commande selon toute revendication précédente, carartérisé en ce qu'une enveloppe ou soufflet de protection convoluté est prévu en tant que joint d'étanchéité entre le logement tubulaire (10) et l'élément terminal (13).

11. Dispositif de réglage pour câble de commande selon toute revendication précédente, caractérisé en ce que la conicité de la seconde surface tronconique (16) du moyen de positionnement (11) est légèrement inférieure à la conicité des secondes surfaces en partie tronconiques (15) du collet (14).

**Patentansprüche**

1. Seilzugeinstellvorrichtung mit folgendem Aufbau: ein rohrförmiges Gehäuse (10) weist an einem Ende ein erstes, in einen Kabellauf einfügbares Verankerungsteil (12) und am anderen Ende eine Feststelleinrichtung (11) für ein Abschlußglied (13) auf, welches sich koaxial zu dem rohrförmigen Gehäuse (10) zwischen einer völlig rückgezogenen Stellung und einer völlig ausgezogene Stellung bewegen kann; das rohrförmige Gehäuse und das Abschlußglied (13) sind an ihrer Oberfläche mit in Umfangsrichtung verlaufenden Riffelungen (32) gebildet, die in einer Klemmhülseneinrichtung (14) eingreifen können; an dem dem rohrförmigen Gehäuse entfernten Ende ist ein zweites Verankerungsteil in den Kabellauf einfügbar; gekennzeichnet durch folgende Merkmale: eine erste Federeinrichtung (19) spannt das Abschlußglied in die völlig im rohrförmigen Gehäuse rückgezogene Stellung; die Klemmhülseneinrichtung (14) ist in der Feststelleinrichtung angeordnet und auf der Innenoberfläche mit Riffelungen (31) geformt, die zur Zusammenarbeit mit den Riffelungen (32) des Abschlußgliedes ausgebildet sind; eine zweite Federeinrichtung (17) spannt die Klemmhülseneinrichtung (14) radial nach innen; eine erste konische Oberfläche (23) am axial inneren Ende der Feststelleinrichtung (11) ist zur Zusammenarbeit mit ersten konischen Oberflächen (22) auf der Klemmhülseneinrichtung (14) vorgesehen, so daß eine axiale Relativbewegung der Klemmhülseneinrichtung axial nach innen die Klemmhülseneinrichtung radial nach außen drängt; eine zweite konische Oberfläche (16) am axial äußeren Ende der Feststelleinrichtung ist zur Zusammenarbeit mit zweiten, teilweise konischen Oberflächen (15) auf der Klemmhülseneinrichtung vorgesehen, so daß eine axiale Relativbewegung der Klemmhülseneinrichtung axial nach außen die Klemmhülseneinrichtung radial nach innen drängt und die Riffelungen (31) auf der Klemmhülseneinrichtung mit den Riffelungen (32) auf dem Abschlußglied ineinandergreifen und dabei die axiale Bewegung des Abschlußgliedes in Richtung auf die völlig aus dem rohrförmigen Gehäuse ausgezogene Stellung hemmt bzw. verhindert.

2. Seilzugeinstellvorrichtung nach Anspruch 1, dadurch gekennzeichnet, daß ein Entriegelungsrohr (25) sich koaxial und benachbart zu dem Abschlußglied (13) durch die Feststelleinrichtung (11) erstreckt und an seinem axial inneren Ende mit einer dritten konischen Oberfläche (28) versehen ist, die zur Zusammenarbeit mit dritten, teilweise konischen Oberflächen (27) auf der Klemmhülseneinrichtung (14) angeordnet sind, so daß die Relativbewegung des Entriegelungsrohres (25) axial nach innen die Klemmhülseneinrichtung (14) radial nach außen drängt.

3. Seilzugeinstellvorrichtung nach Anspruch 2, dadurch gekennzeichnet, daß der Konuswinkel der dritten konischen Oberfläche (28) auf dem Entriegelungsrohr (25) etwas kleiner ist als der Konuswinkel der dritten, teilweise konischen Oberflächen (27) auf der Klemmhülseneinrichtung (14).

4. Seilzugeinstellvorrichtung nach Anspruch 2 oder 3, dadurch gekennzeichnet, daß das Entriegelungsrohr (25) an seinem axial inneren Ende mit einem vergrößerten Kopf (29) ausgebildet ist, der zur Anlage in einer Stufenbohrung (26) in der Feststelleinrichtung (11) dient.

5. Seilzugeinstellvorrichtung nach Anspruch 2, 3 oder 4, dadurch gekennzeichnet, daß eine Klammer (33) auf einem Teil des Abschlußgliedes (13) außerhalb des rohrförmigen Gehäuses (10) vorgesehen ist und zwischen einer Eingriffsstellung, bei der die Klammer (33) mit mindestens einer der Riffelungen des Abschlußgliedes in Eingriff steht, und einer Außereingriffsstellung, in welcher die Klammer von den Riffelungen (32) frei ist, bewegbar ist.

6. Seilzugeinstellvorrichtung nach Anspruch 5, dadurch gekennzeichnet, daß die Klammer (33) als länglich-kreisförmige Scheibe ausgebildet ist, die eine länglich-kreisförmige Öffnung aufweist, deren eines Teil (34) enger als das andere Teil (35) ist, um in die Riffelungen (32) einzugreifen, und daß die kreisförmigen Enden der Scheibe mit Flanschen (36) versehen sind.

7. Seilzugeinstellvorrichtung nach einem der vorhergehenden Ansprüche, dadurch gekennzeichnet, daß die erste Federeinrichtung (19) eine Schraubenfeder aufweist, die sich zwischen einem Sitz (20) an der Feststelleinrichtung (11) und einem Kragen (21) erstreckt, der an einem innerhalb des rohrförmigen Gehäuses (10) gelegenen Endteil des Abschlußgliedes befestigt ist.

8. Seilzugeinstellvorrichtung nach einem der vorhergehenden Ansprüche, dadurch gekennzeichnet, daß die zweite Federeinrichtung (17) eine sich in Umfangrichtung erstreckende Feder aufweist, die in einer sich in Umfangsrichtung erstreckenden Nut (18) in der radial äußeren Oberfläche der Klemmhülseneinrichtung (14) angeordnet ist.

9. Seilzugeinstellvorrichtung nach einem der vorhergehenden Ansprüche, dadurch gekennzeichnet, daß die Riffelungen (31, 32) als im Abstand zueinander anordnete Umfangsnuten von 90° Dreieckprofil ausgebildet sind.

10. Seilzugeinstellvorrichtung nach einem der vorhergehenden Ansprüche, dadurch gekennzeichnet, daß ein biegsamer Balg oder Schuh (37) als Abdichtung zwischen dem rohrförmigen Gehäuse (10) und dem Abschlußglied (13) vorgesehen ist.

11. Seilzugeinstellvorrichtung nach einem der vorhergehenden Ansprüche, dadurch gekennzeichnet, daß der Konuswinkel der zweiten konischen Oberfläche (16) in der Feststelleinrichtung (11) etwas kleiner als der Konuswinkel der zweiten, teilweise konischen Oberflächen (15) der Klemmhülseneinrichtung (14) ist.

FIG.1

FIG.2

FIG.3

# FIG.4

# FIG.5

# FIG.6

EP 0 234 864 B1